# EUROPEAN PATENT SPECIFICATION

(11) **EP 1 247 245 B1**
(45) Date of publication and mention of the grant of the patent: **15.10.2003**
(21) Application number: 00987429.8
(22) Date of filing: 21.12.2000
(51) Int. Cl.: G06K 7/12, G06K 19/14

(54) **ARTICLE AUTHENTICATION**
PRODUKTECHTHEITSPRÜFUNG
AUTHENTIFICATION D'ARTICLE

(30) Priority: 10.01.2000 EP 00810018
(43) Date of publication of application: 09.10.2002
(73) Proprietor: SICPA HOLDING S.A., 1008 Prilly (CH)
(72) Inventor: EGGER, Philipp, CH-1004 Lausanne (CH); MÜLLER, Edgar, CH-1700 Fribourg (CH)
(74) Representative: Hepp, Dieter
(86) International application number: EP0013062
(87) International publication number: WO01052175

(56) References cited:
- EP-A- 0 353 078
- EP-A- 0 523 828
- WO-A-90/16043
- GB-A- 2 258 660
- US-A- 5 541 012

## Description

The present invention relates to an advanced product security system and to an advanced method for authentication of a security article according to the preambles of the independent claims.

Coating composition containing up-converting materials, particularly incorporated as pigments in coating compositions are well known and have been described for applications in document security in several publications, e.g. GB 2 258 659, GB 2 258 660, M. Martindill in Paint Polymers Color Journal, 8, 1996.

Luminescent materials can absorb certain types of energy acting upon them and subsequently emit this absorbed energy as electromagnetic radiation. Down-converting luminescent materials absorb electromagnetic radiation at a higher frequency (shorter wavelength) and re-emit it at a lower frequency (longer wavelength). Up-converting luminescent materials absorb electromagnetic radiation at a lower frequency and re-emit part of it at a higher frequency. Luminescent materials are used for coding and marking of mass-produced goods, high value branded articles and security documents. In certain cases an up-converting luminescent is added as a hidden "taggant" to a transparent or colored coating composition or printing ink, which is applied to branded goods in form of barcodes, company emblems, labels, etc. This allows a subsequent recognition of the genuine article in the fight against counterfeiters and product piracy.

Light emission of luminescent materials arises from excited states in atoms or molecules. The radiative decay of the excited states has a characteristic decay time which depend on the material and can range from a lifetime of shorter then 10⁻⁹ s to several hours. This means that between excitation and light emission there is a certain time span. Most of the luminescent materials or up-converters, particularly up-converting materials, are suitable for creating machine readable codes. Machine readability is a prerequisite for the application of up-converters in mass-produced goods since it is widely used in the automation, automatic sorting processes, in control of production batches, authentication of goods, quality and packaging. Machine readability is of course also used in security applications for the purposes of counterfeit and fraud detection, the so called "machine verification".

Up-converting materials are of inorganic nature and consist essentially of a crystal lattice in which rare-earth ions are present as activators and sensitizers. The excitation and emission characteristics of up-converting materials are inherent characteristics of the rare earths employed. Their corresponding optical absorption and emission processes are due to electron transitions within the incompletely filled 4f shell of the rare earth ion. This electron shell is strongly shielded from the chemical environment of the atom, such that variations in the crystal lattice, thermal vibrations, etc. have only a marginal influence on it. Consequently, rare-earth ions have narrow band optical absorption and emission spectra, which are to a great extent independent of the nature of the crystal lattice. The sharp, discrete bands and the low interaction with the crystal lattice usually result in a high saturation of the luminescence color and a high luminescence quantum yield.

Rare-earth ion luminescence activators have relatively long-lived excited states and a particular electronic structure. This permits the energy of two or more photons in succession to be transmitted to one single luminescence centre and cumulated there. An electron is thus promoted to a higher energy level than that corresponding to the incoming photon energy. When this electron returns from its higher level to the ground state, a photon having about the sum of the energies of the cumulated exciting photons is emitted. In this way it is possible to convert e.g. IR radiation into visible light. Alkali and alkaline earth metal halides, and the halides, oxyhalides and oxysulfides of yttrium and lanthanum and gadolinium are principally used as the host material, while e.g. Er³⁺, Ho³⁺ and Tm³⁺ serve as activators. Additionally ytterbium (3⁺) and/or other ions can be present in the crystal lattice as sensitizer to increase the quantum yield.

Up-converting materials which are stable enough for being incorporated in carrier media have been extensively described in literature in view of quality and quantity of host lattices, manufacturing processes, rare earth activators, excitation and detection modes. Counterfeiters may therefore have access to up-converting materials and the published technology and eventually can imitate security markings; thus product security aspects are not longer provided.

The product security systems as described in GB 2 258 659 and GB 2 258 660 comprise security markings based on up-converting materials which depend on absorption of two or more photons of a same wavelength. This requires active ions which have energy levels at almost regular intervals, i.e. where at least the distance between the ground and first excited state of the rare earth ion is substantial equal to the energy distance between the first and the second excited state. This requirement is approximately fulfilled only in Er³⁺, Ho ³⁺ and Tm³⁺ and represents thus a major limitation to the extension of the available up-converter product palette.

It is the object of the present invention to overcome the drawbacks of the prior art.

In particular it is an object of the present invention to provide new and advanced features for product security systems.

It is a further object of the invention to improve product security markings which are based on up-converting materials.

In another object of the invention a composition and manufacturing process of new and uncommon up-converting materials shall be provided.

In still another object of the invention an advanced method for authentication a security article shall be given.

These objects are solved by the characterizing features of the independent claims.

In particular they are solved by an advanced product security system comprising at least one up-converting material which comprises at least one activator ion having discrete energy levels as at least part of a security marking and at least one authenticating equipment. The equipment comprises at least one source of electromagnetic radiation of at least one first preselected wavelength and at least one second source of electromagnetic radiation of at least one second preselected wavelength said first and said second wavelength being different from each other and being chosen such as to cause the up-converting material to release electromagnetic radiation upon combined irradiation with at least said first and second wavelength. Said released electromagnetic radiation comprises radiation of at least one further third wavelength which is specific for the return of at least one electron from an energy level at said activator ion to which the electron is excited by the combined radiation of at least said first and said second wavelength.

The further third wavelength is different from said first and said second wavelength.

The term "product security system" stands for the combination of a compound containing inherent properties and a corresponding authenticating equipment or reading/detecting device which is able to measure and/or analyze and/or quantify said inherent properties by an optical, electronic and/or mechanical device.

The term security article is to be understood as the article comprising said up-converting material with at least one activator ion having discrete energy levels as a security marking and which releases radiation upon combined excitation with radiation of at least two wavelengths different from each other.

The security marking can be incorporated in a coating composition, in particular in form of a printing ink, and applied as a layer to the security article. In another embodiment the security marking is incorporated in the material constituting the security article, e.g. in the paper forming the bank note. The security marking can also be applied or/and incorporated in other security marking such as hologramms.

The advanced system of the present invention enlarges the capacity of product security. The application of up-converting materials for security marking is not longer limited to those materials which have energy levels at almost regular equal-spaced intervals but enable according to the invention any arbitrary rare-earth activator in to be used, as long as it has sufficiently long-lived intermediate excited state and a host matrix stable to the environment of application. Thus the group of rare earth ions as activators are considerably expanded.

The authentication equipment comprises two or more sources of electromagnetic radiation, wherein the first source emits radiation of the first preselected wavelength and the second source emits radiation of the second preselected wavelength. Further sources can emit radiation of further wavelengths. The sources can be combined in the same physical device. Preferably the source/sources of electromagnetic radiation is/are laser/lasers or comprise lasers. In a luminescent material where a first energy gap between ground and a first excited state of the activator ion is different from a second energy gap between said first and a second excited state, the radiation of said first wavelength, corresponding according to Planck's law ΔE = hν to said first energy gap, will only give rise to a population of activator ions in said first excited state. Simultaneous irradiation with a source of said second wavelength, corresponding to said second energy gap, can rise the ion population in said first excited state further up to said second, higher excited state. The resulting population of ions in said second excited state is roughly proportional to the product of the irradiation intensities of both, said first and said second light source. The electron is promoted from the ground to the first excited state by radiation of the first preselected wavelength and it is further promoted from the first excited state to the second excited state by radiation of the second preselected wavelength. Optionally the electron is promoted to even higher excited states by further exposing the up-converter to radiation of adapted wavelengths. It is a prerequisite that at least the energy of the radiation of the first and of the second wavelength must be capable to promote the electron. When the electron returns from the second or any higher state in energy to any state lower in energy, electromagnetic radiation comprising the specific third predetermined wavelength is emitted.

In another embodiment the electron is promoted from the ground state to the first excited state, by radiation of the first preselected wavelength, subsequently it falls back to an "intermediate" state less in energy than the first excited state but not identical in energy to the ground state and is promoted thereafter from that "intermediate" state to the second excited state by a second preselected wavelength. The excitation to the second or higher excited states can thus be regarded as a cooperative excitation from at least two spectrally defined light sources.

In the context of the present invention the authenticating equipment is portable or stationary. The laser or lasers can emit radiation of the preselected wavelengths in a continuous mode. In a preferred embodiment the laser emits radiation in a pulsed mode with pulses having a peak power sufficient to induce a detectable emission of said up-converting material. Preferably the laser has a peak power equal or more than 1 W and even more preferably of about 10 W. Particularly in case the equipment is portable, the pulse repetition frequency and the width of the laser pulses are selected in a way that the mean power of the laser is sufficiently small so as not to produce eye hazard. Preferably the laser mean power is equal or less than 5 mW and more preferably equal or less than I mW and even more preferably equal or less than 0.5 mW. To comply with the mean power limitation in order not to risk eye damages the pulse duration of the laser pulses is equal or less than 10 µs, preferably equal or less than 1 µs, and even more preferably equal or less than 100 ns. For the same reasons the pulse repetition frequency is equal or less than 10 kHz preferably equal or less than 1 kHz and even more preferably equal or less than 100 Hz. In case the authenticating equipment contains more than one laser and especially when the authenticating equipment is portable, all lasers are processed in pulsed mode and in that comply with the limitations given before. Preferably all lasers are laser class 1 compatible.

The authenticating equipment further comprises optical elements for directing and/or focusing the laser beam onto the up-converting material or for producing a parallel beam of light. In addition it can comprise optoelectronic detecting devices. The authenticating equipment can be coupled to a computer or microcontroller chip which evaluates and processes the emission data.

The irradiation with at least the first and second preselected wavelength may occur exactly at the same time or can be delayed in time with respect to each other. Delay time must be chosen within the range of the lifetimes of the corresponding exited states.

In the context of the present invention "electromagnetic radiation" encompasses radiation (for both excitation and emission) of wavelengths in the range of 1 NM to 1 mm. However, most of the excitation radiation and most of the emitted radiation is radiation with wavelengths in the range of 100 nm to 10 µm thus encompassing invisible UV - and IR - electromagnetic radiation.

The further emitted radiation of the specific predetermined third wavelength which serves for detection is in a range of between 150 nm to 2500 nm . In a preferred embodiment of the invention the further emitted radiation of the specific predetermined third wavelength which serves for detection is visible to the naked human eye and is in range of between 400 nm to 600 nm. Alternatively the predetermined third wavelength is detectable by a silicon detector.

In another embodiment of the present invention the specific third wavelength which serves for detection is invisible to the naked human eye and is comprised preferably in the range of between 180 run to 400 nm.

In still another embodiment of the present invention the emitted radiation of the specific wavelength which serves for detection of the up-converting material is invisible to the naked human eye and is comprised preferably in the range of between 700 nm to 2'500 nm, preferably in the range of between 1'100 nm and 2'500 nm.

In a further embodiment of the invention the radiation of the specific third wavelength is machine detectable and readable. The sensitivity of the eye is about 1 lm/m2 for the color receptors, and 0.01 1m/m² for the white light receptors. Detectable means in this context that the emission can be detected with the help of an appropriate optoelectronic detecting device. Optoelectronic detection is possible down to the level of single-photon counting, that means about 10-14 lm/m². In case of electronic/optoelectronic detection, the up-converting material needs not to be excited with a continuous ray of said first and said second preselected wavelengths. A response can already be detected to single excitation pulses of both wavelengths. This is possible because commonly available electronic detection devices are fast enough to recognize the emission of radiation having the specific wavelength even if they are pulsed in the microsecond time scale and below. The human eyes "inertia" impedes a visual detection of events which are faster than a 1/10 of a second. An optoelectronic detection device can thus be engineered such as to operate in an entirely masked manner, even with conventional up-converting materials which per se would have a good visible response. Masked detection increases the security potential of method according to the present invention.

Up-converting materials with rare-earth activator ions having approximately regularly spaced energy intervals between ground state and the first few excited states are already well known for security applications. In addition to those, the present invention emphasizes the use of rare-earth activator ions having irregularly spaced energy intervals between their different states for up-converting phosphors of another kind, which are useful for security applications.

The up-converting material can be a crystalline component selected from the group consisting of pure or mixed alkali and alkaline-earth lanthanide halides and pure or mixed oxyhalides and oxysulfides of yttrium and lanthanum or gadolinium as host matrix having incorporated rare earth ions as activators and optionally as sensitizers.

Preferably the up-converting material is a pigment with a particle size in the range of between 0.1 µm to 50 µm more preferably in the range of between 1 µm to 20 µm and even more preferably of between 3 µm to 10 µm.

In a preferred embodiment of the present invention the pigment which is applied in a product security system comprises glass ceramic particles.

Glass ceramics are composite solids, which are formed by controlled devitrification of glasses. They can be manufactured by heating a suitable precursor glasses to allow for partial crystallization of part of the glass composition. Glass ceramics comprise thus a certain amount of a crystalline phase in an embedded glass phase.

Preferably the glass ceramics crystalline phase is a luminescent material. This is of particular interest and value for luminescent materials, which are not stable in an ordinary environment, and which can in this way be protected from the adverse influence of oxygen, humidity, etc. The glass matrix protects the crystals from dissolution in an adverse environment, and permits incorporation into a coating composition or the like. New types of luminescent materials are thus amenable to printing applications by this method.

Many photophysically interesting luminescent host materials are e.g. water soluble to a certain or a large extent, like the fluorides, chlorides or bromides of the lanthanide elements. The solubility is due to the rather weak electrostatic crystal lattice forces tied to mono-negative anions. The same materials show, due to the same reason and/or to the presence of heavy ions, only low-frequency vibrational modes (phonon modes) of their crystal lattices. That the absence of high-frequency vibrational modes results in largely increased excited state life times and luminescence quantum yields. The reason for this is that the probability of vibrational desexcitation of an electronically excited activator ion is low if the energy gap to the next lower lying electronic level is much larger than the energy of the highest vibrational mode (phonon energy) of the crystal lattice. Energy transfer to the crystal lattice becomes negligible in such cases. Host materials with low phonon energy would thus be highly desirable, especially in the field of up-converting phosphors where long-lived excited states are needed for achieving high quantum yields. Unluckily, the water-solubility and moisture sensitivity of lanthanide halides and related materials has up to now prevented corresponding technical applications.

Preferably the crystalline component of the glass ceramics has a phonon energy not exceeding 580 cm⁻¹, preferably not exceeding 400 cm⁻¹ and even more preferably not exceeding 350 cm⁻¹. These values stand for rather low-phonon energy solids, which are especially suitable as luminescence hosts because they allow for emissions from excited energy levels that would otherwise be quenched in high phonon energy solids, such as oxides or the like.

Phonons, as mentioned, are crystal lattice vibrations in a material. The relevant phonon energy is tied by Planck's relationship E=hν to the frequency ν of the highest measured MIR absorption band of the compound. If an excited rare earth ion has a transition possibility between two energy levels of interest that corresponds to only a few times the phonon energy of the host lattice, the energy will be preferably and rapidly dissipated to the crystal lattice, without emission of electromagnetic radiation (radiationless transition). In a host lattice with much lower phonon energy, the same transition will preferably radiate. In intermediate cases, both processes, radiating, and radiationless desactivation, will compete with each other.

In the Pr³⁺ ion, the ¹G₄ level of Pr³⁺ is only 3000 cm⁻¹ above the ³F4 level. In an oxide matrix, such as a praseodymium glass, only few Si-O vibration phonons (1100 cm⁻¹) are required to bridge this gap. Thus any excited electron in the ¹G₄ level will rapidly return to the ³F₄ level by exciting crystal lattice phonons, and no electromagnetic radiation of the corresponding wavelength is produced. In a Pr³⁺ doped LaF₃ matrix, the phonon energy is 350 cm⁻¹, and the ¹G₄ to ³F₄ transition of the Pr³⁺ ion occurs radiatively. Additionally, the live time of the ¹G₄ state is strongly increased.

Since phonon energies are controlled by the bond strengths and the masses of the ions forming the crystal lattice, heavy elements with weak bonding will provide the lowest phonon energy materials. The heavy metal fluoride glasses such as e.g. ZBLAN (53ZrF₄-20BaF₂-4LaF₃-3AlF₃ -20NaF) have half the maximum phonon energy of silicates and thus take twice as many phonons to quench the ¹G₄ level of Pr³⁺. ZBLAN glasses, a well known host lattice for laser and fibre-optic applications, can also be used as the glass component of glass ceramic composites according to the present invention.

Preferably the glass ceramic is substantially transparent to electromagnetic radiation in the range of between 400 nm to 750 nm, i.e. in the visible range of the electromagnetic spectrum. Transparency of glass ceramics is determined by the average dimensions of the embedded crystals and/or the refractive index difference between the crystals and the glass matrix.

In a preferred embodiment the average dimension of crystals is not exceeding 40 nm.

In a further preferred embodiment the average distance from one crystal to another crystal being embedded in the glass matrix may not exceed 50 nm, preferably not exceeding 40 nm. Apart from transparency another aspect being related with the dimension limitations of the crystals is the protection of the crystals by the glass matrix. Those host crystals up-converting properties having poor stability towards environmental influences and being neither physically or chemically resistant towards organic resins, solvents, humidity, etc. can effectively be protected by a glass-matrix having such chemical and physical resistance. Even grinding the glass ceramics to the desired particle size does surprisingly not adversely affect the up-converting properties of the glass ceramics. The crystals remain sufficiently protected by the glass matrix when the crystal is sufficiently small.

In a preferred embodiment at least one crystal embedded in the glass matrix comprises an active ion.

In the context of the present invention the active and/or sensitizer ions being present in at least one of the crystals in the glass matrix are rare earth ions having an appropriate electronic structure, particularly suitable are rare earth ions selected from the group consisting of Pr³⁺, Nd³⁺, Sm³⁺, Eu³⁺_{,} Tb³⁺, Dy³⁺ Ho³⁺, Er³⁺, Tm³⁺ and Yb³⁺.

In a preferred embodiment of the present invention the glass ceramics is an oxyfluoride glass ceramics. Oxyfluorides have the low phonon energy of a fluoride matrix and the durability and mechanical properties of an oxide glass. The oxide glass will determine the mechanical and physical properties of the composite whereas the optical properties of the active ion will be controlled by the embedded fluoride crystalline phase.

A preferred glass matrix of oxyfluorides consisting essentially of NAS glass (Na₂O Al₂O₃-SiO₂). NAS as host glass shows favorable properties with respect to melting and forming, good transparency and excellent durability. The content of SiO₂ preferably is between 30 mol% to 90 mol% of the mols of the glass, preferably between 50 mol% and 80 mol%. The higher the SiO₂ content in the glasses the more viscous they get and the easier they can be formed into large blocks. However, the fluorine retention is less than in glasses which have a SiO₂ content towards the lower limit. The SiO₂ can be replaced e.g. by GeO₂ and Al₂O₃ by Ga₂O₃. The alkali content (Na₂O) can be replaced fully or partly by other alkalis, mixture of alkalis or alkaline-earths such as BaO. Many other ingredients can be added to the NAS glass in order to modify and tailor the refractive index, expansion, durability, density and color of the glass matrix.

Preferably the crystal phase in the oxyfluorides comprises LaF₃. LaF₃-glass ceramics can be achieved by heat treating tempering Al₂O₃ rich NAS glass saturated with LaF₃. The solubility of LaF₃ is determined by the Al₂O₃ in the glass. LaF₃ levels far below the solubility limit results in stable glasses that do not form glass ceramics when heat treated. Therefore the content of LaF₃ in the glass has to be within + 15 %, preferably 10 % of the solubility limit of LaF₃. In case the alkali content is replaced by alkaline-earth compositions the solubility of LaF₃ is raised. Therefore the amount of LaF₃ should be increased. LaF₃ glass ceramics shows a chemical resistance which is in many aspects better than glass ceramics used before, e.g. ZBLAN glass ceramics.

The LaF₃ crystal phase allows the partition of any rare earth. Therefore a huge variety of up- and down converting luminescent materials with very unusual electronic structures can be provided by substitution of part or all of the La³⁺ by other rare earth ions, which are responsive to excitation radiation not commonly used in established document and product security phosphors. Thus, the use of glass ceramic luminescent materials in combination with two- or multi- photon excitation according to the advanced product security system of the present invention substantially broadens the palette of available luminescence able to emit in up-converting mode.

In a preferred embodiment the oxyfluoride glass ceramics is transparent and colorless to the human eye.

By controlling the correct microstructure, transparency of oxyfluoride glass ceramics may be achieved which is equivalent to best optical glasses. Generally the microstructure of the LaF₃ glass ceramics is a function of the heat treatment temperature. When heat treated at 750°C for 4 h a large number of relatively small (ca. 7 nm) LaF₃ crystals are visible. The higher the temperature the crystallites grow larger. At 800°C the average crystal has a dimension of 20 nm (longest room axis?) and at 825°C over 30 nm average crystallite size are observed. Since one influence factor for transparency is the appropriate crystallite size, the glass ceramics which was formed on 750°C for 4 h resulted in the most transparent of all. Even with the increase of crystallite size related with the heat treatment up to 775°C the transparency was still higher than of untreated material. The transparency is measured as a function of the extinction which is the sum of the total loss of scattering and absorption effects. Above 850°C the oxyfluoride glass ceramics becomes opaque.

The tempered glass ceramic can be ground to pigment. Optimal particle size for most printing applications is in the order of 3 to 10 µm. After incorporating such transparent oxyfluoride glass ceramic particles into a transparent coating or ink vehicle, an invisible product coding can be applied to a substrate. Since the oxyfluoride glass ceramic pigments can be designed with emission properties which do not respond to the excitation radiation of commonly used wavelengths it becomes very difficult for a potential counterfeiter to localize and identify the marking or to retro-engineer the pigment.

Further part of the present invention is an advanced method for authentication of a security article, said method comprises the steps of
a) selection of at least one up-converting material having an electronic structure comprising discrete energy levels;
b) selection of means for emitting electromagnetic radiation of at least one first preselected wavelength and at least one second preselected wavelength and optionally of other wavelengths wherein at least said first and said second wavelength are different from each other;
c) exposing said up-converting material selected in step a) to radiation of at least said first and said second preselected wavelength defined in step b) whereas the first wavelength promotes at least one electron from a first energy level to at least one second energy level being higher in energy than said first level, and said second wavelength promotes said electron from the second energy level to at least one third energy level, said third energy level being higher in energy than said second energy level;
d) optionally exposing said up-converting material to additional radiation of at least one further wavelength which promotes the electron to energy levels higher in energy than said third level;
e) recording the emission spectrum resulting from the decay of said higher energy levels of said up-converting material;
f) analyzing said emission spectrum resulting from said decay, for the presence of at least one wavelength which is specific for the decay of at least one electron from at least said third or higher energy level.

Whereas the first and the second preselected wavelength have to be selected such that they are different from each other, the further wavelengths can either be the same as the first and/or the second wavelength or can be different at all.

An alternative method for authentication of a security article, said method comprises the steps of:
a) selection of at least one up-converting material having an electronic structure comprising discrete energy levels;
b) selection of at least one source of electromagnetic radiation emitting a beam of wavelengths over a preselected frequency range comprising at least one first wavelength capable of promoting at least one electron in the up-converting material selected in step a) from a first energy level to at least one second energy level higher in energy than said first level, and at least one second wavelength capable to promote said electron from the second energy level to at least one a third energy level being higher in energy than said second energy level; whereas said first and said second wavelength are different from each other;
c) exposing said up-converting material selected in step a) with said beam of wavelengths defined in step b);
d) measuring the absorption spectrum of said up-converting material;
e) analyzing said absorption spectrum for complete and/or substantial absorption of preselected wavelength not being the first wavelength, particularly of said second wavelength.

In this method radiation is emitted from the up-converting material, too. However the detection mode relies not on measuring the emitted radiation but on measuring the absorption characteristic. Absorption lines are observed at wavelengths corresponding to spectral transitions from populated excited state levels to empty higher excited levels.

A still alternative method for authentication of a security article, said method comprises the steps of:
a) selecting at least one luminescent material having an electronic structure comprising discrete energy levels;
b) selecting at least one source of electromagnetic radiation emitting at least at one first wavelength with intensity capable of promoting a significant part of said material into a first or a higher excited state, and at least at one second wavelength substantially different from said first wavelength, corresponding to a spectral absorption of said material in said first or higher excited state;
c) exposing said material selected in step a) to said source of electromagnetic radiation defined in step b);
d) recording the light absorption of said material at said second wavelength;
e) analyzing the recorded light absorption of step d) for presence or absence of said material.

In all methods for authentication of a security article the up-converting material in step a, is at least part of the security marking applied and/or incorporated in the security article.

Part of the present invention further is a security marking providing an electromagnetic emission of a certain wavelength as a authenticating feature, said electromagnetic emission being produced as emission from an anti-stokes material as a result of excitation of said anti-stokes material by electromagnetic radiation of at least two different wavelengths.

In a further embodiment the security marking is part of a security article.

The invention will further be explained with reference to the drawings:

Figure 1 shows a schematic representation of a product security system embodying an up-converting material and a authenticating equipment comprising two sources of electromagnetic radiation and a detecting device.

Figure 2 shows a schematic representation of the energy levels and optical transitions in up-converting materials representing a) a material with equally spaced energy levels, suitable for single wavelength excitation (state of the art) and b) a material with energy levels of different distance requiring multi-wavelength, at least two wavelength excitation.

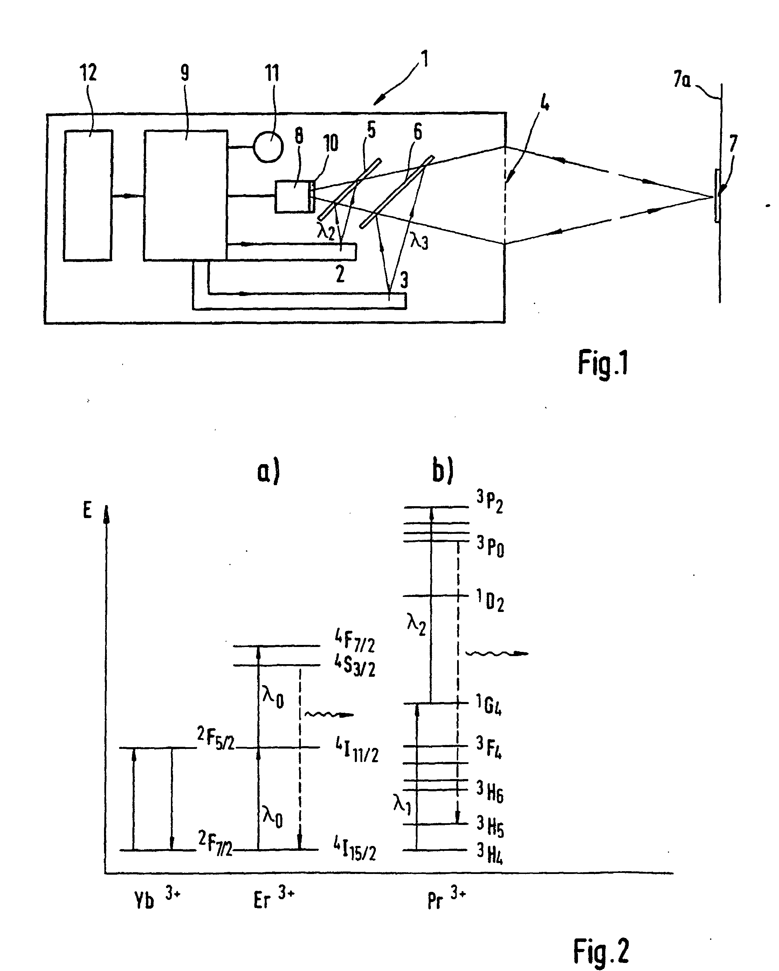

Figure 1 shows a authenticating equipment 1 which is part of the product security system of the present invention. Two laser diodes 2 and 3 which are capable of emitting radiation having two different wavelength λ₂ and λ₃ are provided. Their light is led to an optical system 4 by two dichroic mirrors, 5 and 6 and then focused on a marking 7 comprising up-converting material. The marking 7 is applied to the surface of a product 7a. The response signal of the marking 7 is focused by the same optical system 4 and passing the dichroic mirrors 5 and 6 directed through a filter 10 to a photodetector 8. This embodiment with two excitation sources allows efficiently to obtain up-conversion signals from anti-Stokes materials which do not have equally spaced energy levels in its electronic structure. A micro controller circuit 9 is connected to a power supply 12 and activates the pulse lasers 2 and 3 with an appropriate excitation timing sequence. The controller circuit 9 also receives the output from the photodetector 8 to evaluate the up-converting response signal. The purpose of the filter 10 is to select the appropriate wavelength of the response signal. A display 11 may be provided for indicating the result of the authentication operation.

Figure 2 shows schematically two electron energy level situations which are encountered in rare earth ion based up-converting materials.

Fig. 2a shows the energy level scheme of a material having approximately equally spaced energy levels. Such materials are suitable for single wavelength excitation. In the given example, embodied e.g. by Y₂O₂S:Er,Yb, ytterbium(3+) acts as a sensitizer ion and erbium(3+) as an activator ion. When subjected to IR radiation of 980 nm wavelength, an ytterbium ion is promoted from its ground state (²F_{7/2}) to a first excited state (²F_{5/2}. The energy of the excited Yb³⁺ iS subsequently transferred to an Er³⁺ ion, promoting it from its ground state (⁴I_{15/2}) to a first excited state (4I_{11/2}). By further irradiating the excited Er³⁺ ion with IR radiation of 980 nm wavelength, it can be promoted to a second, higher excited state (⁴F_{7/2}). This second excited state decays in a non radiative way to the long-lived ⁴S_{3/2} state which, in turn, decays to the Er³⁺ ground state (4I_{15/2}) under emission of green light of 550 nm wavelength.

Fig. 2b shows the energy level scheme of an up-converting material with unequally spaced energy levels as they are comprised in the marking 7 of Fig. 1. Such materials require two- or multi-wavelength excitation, using a combination of two or several lasers. As an example the energy level diagram and the two-step up-converting mechanism of Pr³⁺ ion in an oxyfluoride glass ceramic composite are shown. The luminescent host matrix is LaF₃:Pr, the crystalline component of the glass ceramic in question. Irradiation of the material with IR radiation of a first preselected wavelength (1014 nm) promotes part of the Pr³⁺ ions from the ³H₄ ground state into the ¹G₄ excited state. From this latter, no further excited state can be reached with 1014 nm radiation. Additional irradiation of the material with a second, shorter wavelength (850 nm), however, promotes some of the excited Pr³⁺ ions from the ¹G₄ state to the higher excited ³P₂ state. The ³P₂ excited state subsequently decays in a non-radiative way to the ³P₀ state, which, in turn, decays to the ³H₅ state under emission of visible 530 nm radiation. The ³H₅ state then reverts to the ³H₄ ground state in a non-radiative way.

When the lasers are operated in pulsed mode, the pulsed excitation of the up-converting material has to occur in appropriate coincidence in space and time, in order to guarantee the success of the second excitation, which must occur during the life-time of the first excited state population. The same holds in cases when even higher excited states have to be reached using irradiation at further wavelengths. However, in certain cases, a time delay in the region of 0.1 µs to 1000 µs between the pulses of different wavelengths can prove useful, in order to allow the material to undergo determinate internal energy transfer processes, which result in the population of a desired excited state. As such internal energy transfer processes are specific to every material, two or multi-wavelength pulse excitation with appropriate time delays offers a way to design and identify even more specifically identifiable luminescent materials.

## Claims

1. Advanced product security system comprising
- at least one up-converting material which comprises at least one activator ion having discrete energy levels as at least part of a security marking and
- one authenticating equipment (1)
**characterized in that** the authenticating equipment comprises at least one source of electromagnetic radiation (2) of at least one first preselected wavelength and at least one second source of electromagnetic radiation (3) of at least one second preselected wavelength, said first and second wavelengths being different from each other and being chosen such as to cause the up-converting material to release electromagnetic radiation upon combined irradiation with at least said first and second wavelength and said released electromagnetic radiation contains radiation of at least one further third wavelength being specific for the return of at least one electron from an energy level of said activator ion to which at least said electron is excited by the combined radiation of at least said first and at least said second wavelength.

2. Product security system according to claim 1 **characterized in that** said first and second source of electromagnetic radiation comprise one laser.

3. Product security system according to claim 2 **characterized in that** said laser is operable in a pulsed mode.

4. Product security system according to one of the claims 1 to 3 **characterized in that** said authenticating equipment comprises at least one optoelectronic detecting device.

5. Product security system according to one of the claims 1 to 4, **characterized in that** the authenticating equipment further comprises optical elements for directing and/or focusing the laser beam onto the up-converting material.

6. Product security system according to one of the claims 1 to 5 **characterized in that** the further third wavelength is in a range of between 150 nm to 3000 nm.

7. Product security system according to claim 6 **characterized in that** the further third wavelengths is in a range of between 400 nm to 700 nm.

8. Product security system according to claim 6 **characterized in that** said further third wavelength is in a range of between 180 nm to 400 nm.

9. Product security system according to claim 6 **characterized in that** said further third wavelength is in a range of between 700 nm to 2700 nm, preferably in a range of between 1100 nm to 2500 nm.

10. Product security system according to the claims 1 to 9 **characterized in that** the up-converting material is machine readable.

11. Product security system according to one of the claims 1 to 10 **characterized in that** the up converting material comprises at least one crystalline component selected from the group consisting of pure or mixed alkali and alkaline-earth lanthanide halides, pure or mixed oxyhalides of yttrium, lanthanum and gadolinium and oxysulfides of yttrium, lanthanum and gadolinium as host matrix, having optionally incorporated rare-earth ions as activators and further optionally sensitizers.

12. Product security system according to claim 1 to 11, **characterized in that** said up-converting material comprises glass ceramics particles.

13. Product security system according to one of the claims 1 to 12 **characterized in that** the up-converting material is a pigment having a particle size in the range of between 0.1 µm to 50 µm preferably in the range of between 1 µm to 20 µm and even more preferably of between 3 µm to 10 µm.

14. Product security system according to claim 12 **characterized in that** said crystalline component of said glass ceramic composite material has a phonon energy not exceeding 580 cm⁻¹, preferably not exceeding 400 cm⁻¹ and even more preferably not exceeding 350 nm.

15. Product security system according to one of the claims 12 or 14 **characterized in that** the glass ceramic composite material is substantially transparent to electromagnetic radiation in the range of between 400 to 750 nm.

16. Product security system according to one of the claims 12 to 15 **characterized in that** the crystalline component of said glass ceramic material has average dimensions equal or smaller than 50 nm, preferably equal or smaller than 40 nm .

17. Product security system according to one of the claims 12 to 16 **characterized in that** said crystalline component of said glass ceramic composite material comprises at least one active ion for providing long wave to short wave light converting properties.

18. Product security system according to one of the claims 17 **characterized in that** said active ion and optionally said sensitizer is a rare-earth ion, preferably selected from the group consisting of Pr³⁺, Nd³⁺, Sm³⁺, Eu³⁺, Tb³⁺, Dy³⁺, Ho³⁺, Er³⁺, Tm³⁺ and Yb³⁺.

19. Product security system according to one of the claims 12 to 18 **characterized in that** the glass ceramics is an oxyfluoride glass ceramics.

20. Product security system according to claim 19 **characterized in that** the crystalline component of the glass ceramic composite material comprises LaF₃.

21. Product security system according to one of the claims 19 or 20 **characterized in that** the glass matrix of said glass ceramic composite material consisting essentially of Na₂OAl₂O₃SiO₂.

22. Advanced method for authentication of a security article, with a product security system according to the claims 1 to 21, said method comprises the steps of:
a) selection of at least one up-converting material having an electronic structure comprising discrete energy levels;
b) selection of means for emitting electromagnetic radiation of at least one first preselected wavelength and at least one second preselected wavelength and optionally of other wavelengths wherein at least said first and said second wavelength are different from each other;
c) exposing said up-converting material selected in step a) to radiation of at least said first and said second preselected wavelength defined in step b) whereas the first wavelength promotes at least one electron from a first energy level to at least one second energy level being higher in energy than said first level, and said second wavelength promotes said electron from the second energy level to at least one third energy level, said third energy level being higher in energy than said second energy level;
d) optionally exposing said up-converting material to additional radiation of at least one further wavelength which promotes the electron to energy levels higher in energy than said third level;
e) recording the emission spectrum resulting from the decay of said higher energy levels of said up-converting material;
f) analyzing said emission spectrum resulting from said decay for the presence of at least one wavelength which is specific for the decay of at least one electron from at least said third or higher energy level.

23. Security marking providing an electromagnetic emission of a certain wavelength as a authenticating feature, said electromagnetic emission being produced as emission from an anti-stokes material as a result of excitation of said anti-stokes material by electromagnetic radiation of at least two different wavelengths.

24. Article having a security marking providing an electromagnetic emission of a certain wavelength as an authenticating feature said electromagnetic emission being produced as emission from an anti-stokes material as a result of excitation of said anti-stokes material by electromagnetic radiation of at least two different wavelengths.

## Patentansprüche

1. Verbessertes Produktsicherheitssystem mit
- zumindest einem aufwärtswandelnden Material, welches zumindest ein Aktivierungsion mit diskreten Energieniveaus als zumindest einen Teil der Sicherheitsmarkierung umfasst, und
- einer authentisierenden Einrichtung (1),
**dadurch gekennzeichnet, dass**
die authentisierende Einrichtung zumindest eine Quelle elektromagnetischer Strahlung (2) mit zumindest einer ersten vorab ausgewählten Wellenlänge und zumindest eine zweite Quelle elektromagnetischer Strahlung (3) mit zumindest einer zweiten vorab ausgewählten Wellenlänge umfasst, wobei die erste und die zweite Wellenlänge sich voneinander unterscheiden und derart ausgewählt sind, dass sie das aufwärtswandelnde Material veranlassen, bei kombinierter Bestrahlung mit zumindest der ersten und der zweiten Wellenlänge elektromagnetische Strahlung freizusetzen, und wobei die freigesetzte elektromagnetische Strahlung Strahlung von zumindest einer weiteren dritten Wellenlänge aufweist, welche für die Rückkehr von zumindest einem Elektron von einem Energieniveau des Aktivierungsions spezifisch ist, von dem zumindest das Elektron mittels der kombinierten Bestrahlung mit zumindest der ersten und der zweiten Wellenlänge angeregt ist.

2. Produktsicherheitssystem nach Anspruch 1,
**dadurch gekennzeichnet, dass**
die erste und zweiten Quelle elektromagnetischer Strahlung einen Laser umfasst.

3. Produktsicherheitssystem nach Anspruch 2,
**dadurch gekennzeichnet, dass**
der Laser in pulsierendem Modus betrieben werden kann.

4. Produktsicherheitssystem nach einem der Ansprüche 1 bis 3,
**dadurch gekennzeichnet, dass**
die authentisierende Einrichtung zumindest eine optoelektronische Erfassungseinrichtung umfasst.

5. Produktsicherheitssystem nach einem der Ansprüche 1 bis 4,
**dadurch gekennzeichnet, dass**
die authentisierende Einrichtung weiterhin optische Elemente zur Ausrichtung und/oder zur Fokussierung des Laserstrahls auf das aufwärtswandelnde Material umfasst.

6. Produktsicherheitssystem nach einem der Ansprüche 1 bis 5,
**dadurch gekennzeichnet, dass**
die weitere dritte Wellenlänge in einem Bereich zwischen 150 nm und 3000 nm liegt.

7. Produktsicherheitssystem nach Anspruch 6,
**dadurch gekennzeichnet, dass**
die weitere dritte Wellenlänge in einem Bereich zwischen 400 nm und 700 nm liegt.

8. Produktsicherheitssystem nach Anspruch 6,
**dadurch gekennzeichnet, dass**
die weitere dritte Wellenlänge in einem Bereich zwischen 180 nm und 400 nm liegt.

9. Produktsicherheitssystem nach Anspruch 6,
**dadurch gekennzeichnet, dass**
die weitere dritte Wellenlänge in einem Bereich zwischen 700 nm und 2700 nm, vorzugsweise in einem Bereich zwischen 1100 nm und 2500 nm, liegt.

10. Produktsicherheitssystem nach einem der Ansprüche 1 bis 9,
**dadurch gekennzeichnet, dass**
das aufwärtswandelnde Material maschinenlesbar ist.

11. Produktsicherheitssystem nach einem der Ansprüche 1 bis 10,
**dadurch gekennzeichnet, dass**
das aufwärtswandelnde Material zumindest eine kristalline Komponente, ausgewählt aus der Gruppe bestehend aus reinen oder gemischten Alkali- und Erdalkali- Lanthanoidhalogeniden, reinen oder gemischten Oxyhalogeniden von Yttrium, Lanthan und Gadolinium und Oxysulfiden von Yttrium, Lanthan und Gadolinium als Wirtsmatrix umfasst, welche wahlweise eingebrachte Seltene-Erden-lonen als Aktivatoren und weiterhin wahlweise Verstärker aufweist.

12. Produktsicherheitssystem nach einem der Ansprüche 1 bis 11,
**dadurch gekennzeichnet, dass**
das aufwärtswandelnde Material Glaskeramikpartikel umfasst.

13. Produktsicherheitssystem nach einem der Ansprüche 1 bis 12,
**dadurch gekennzeichnet, dass**
das aufwärtswandelnde Material ein Pigment mit einer Partikelgröße im Bereich zwischen 0,1 µm und 50 µm ist, vorzugsweise im Bereich zwischen 1 µm und 20 µm und insbesondere vorzugsweise zwischen 3 µm und 10 µm ist.

14. Produktsicherheitssystem nach Anspruch 12,
**dadurch gekennzeichnet, dass**
die kristalline Komponente des Glaskeramikverbundmaterials eine 580 cm⁻¹ nicht übersteigende, vorzugsweise 400 cm⁻¹ nicht übersteigende und insbesondere vorzugsweise 350 cm⁻¹ nicht übersteigende Phononenenergie aufweist.

15. Produktsicherheitssystem nach einem der Ansprüche 12 oder 14,
**dadurch gekennzeichnet, dass**
das Glaskeramikverbundmaterial gegenüber elektromagnetischer Strahlung im Bereich zwischen 400 und 750 nm im wesentlichen transparent ist.

16. Produktsicherheitssystem nach einem der Ansprüche 12 bis 15,
**dadurch gekennzeichnet, dass**
die kristalline Komponente des Glaskeramikverbundmaterials im Mittel Dimensionen kleiner oder gleich 50 nm aufweist, vorzugsweise kleiner oder gleich 40 nm.

17. Produktsicherheitssystem nach einem der Ansprüche 12 bis 16,
**dadurch gekennzeichnet, dass**
die kristalline Komponente des Glaskeramikverbundmaterials zumindest ein Aktivierungsion umfasst, um die Umwandlungseigenschaften von langwelligem in kurzwelliges Licht zur Verfügung zu stellen.

18. Produktsicherheitssystem nach Anspruch 17,
**dadurch gekennzeichnet, dass**
das Aktivierungsion und wahlweise der Verstärker ein Seltene-Erden-lon ist, vorzugsweise ausgewählt aus der Gruppe bestehend aus Pr³⁺, Nd³⁺, Sm³⁺, Eu3⁺, Tb3⁺, Dy3⁺, Ho3⁺, Er³⁺, Tm³⁺ und Yb³⁺.

19. Produktsicherheitssystem nach einem der Ansprüche 12 bis 18,
**dadurch gekennzeichnet, dass**
die Glaskeramik eine Oxyfluorid-Glaskeramik ist.

20. Produktsicherheitssystem nach Anspruch 19,
**dadurch gekennzeichnet, dass**
die kristalline Komponente des Glaskeramikverbundmaterials LaF₃ umfasst.

21. Produktsicherheitssystem nach einem der Ansprüche 19 oder 20,
**dadurch gekennzeichnet, dass**
die Glasmatrix des Glaskeramikverbundmaterials im wesentlichen aus Na₂O·Al₂O₃·SiO₂ besteht.

22. Verbessertes Verfahren zur Authentisierung eines Sicherheitsartikels, vorzugsweise mit einem Produktsicherheitssystem nach einem der Ansprüche 1 bis 21, wobei das Verfahren folgende Schritte umfasst:
a) Auswählen von zumindest einem aufwärtswandelnden Material mit einer diskrete Energieniveaus aufweisenden elektronischen Struktur,
b) Auswählen einer Einrichtung zur Emission elektromagnetischer Strahlung mit zumindest einer ersten vorab ausgewählten Wellenlänge und zumindest einer zweiten vorab ausgewählten Wellenlänge und wahlweise anderer Wellenlängen, wobei sich zumindest die erste und die zweite Wellenlänge voneinander unterscheiden;
c) Aussetzen des in Schritt a) ausgewählten aufwärtswandelnden Materials der Strahlung von zumindest der in Schritt b) definierten ersten und zweiten vorab ausgewählten Wellenlänge, wobei die erste Wellenlänge zumindest ein Elektron von einem ersten Energieniveau auf zumindest ein zweites Energieniveau anhebt, welches energiereicher ist als das erste Niveau, und die zweite Wellenlänge das Elektron von einem zweiten Energieniveau auf zumindest ein drittes Energieniveau anhebt, wobei das dritte Energieniveau energiereicher ist als das zweite Niveau;
d) Aussetzen des aufwärtswandelnden Materials wahlweise einer zusätzlichen Strahlung von zumindest einer weiteren Wellenlänge, die das Elektron auf energiereichere Energieniveaus als das dritte Niveau anhebt;
e) Aufzeichnen des Emissionsspektrums, aus dem Zurückfallen der höheren Energieniveaus des aufwärtswandelnden Materials resultiert;
f) Analysieren des aus diesem Zurückfallen resultierenden Emissionsspektrums auf die Anwesenheit von zumindest einer für das Zurückfallen von zumindest einem Elektron von zumindest dem dritten oder höheren Energieniveau spezifischen Wellenlänge.

23. Sicherheitsmarkierung, welche eine elektromagnetische Emission einer bestimmten Wellenlänge als authentisierendes Merkmal bereitstellt, wobei die elektromagnetische Emission als Emission aus einem Anti-Stokes-Material erzeugt wird, die dadurch ausgelöst wird, dass das Anti-Stokes-Material elektromagnetischer Strahlung von zumindest zwei unterschiedlichen Wellenlägen ausgesetzt wird.

24. Artikel mit einer Sicherheitsmarkierung welche eine elektromagnetische Emission einer bestimmten Wellenlänge als authentisierendes Merkmal bereitstellt, wobei die elektromagnetische Emission als Emission aus einem Anti-Stokes-Material erzeugt wird, die dadurch ausgelöst wird, dass das Anti-Stokes-Material elektromagnetischer Strahlung von zumindest zwei unterschiedlichen Wellenlägen ausgesetzt wird.

## Revendications

1. Système de sécurité de produit avancé comprenant :
- au moins un matériau convertisseur élévateur qui comprend au moins un ion activateur ayant des niveaux d'énergie discrets en tant que partie au moins d'un marquage de sécurité, et
- un équipement d'authentification (1),
**caractérisé en ce que** l'équipement d'authentification comprend au moins une source de rayonnement électromagnétique (2) d'au moins une première longueur d'onde présélectionnée et au moins une deuxième source de rayonnement électromagnétique (3) d'au moins une deuxième longueur d'onde présélectionnée, lesdites première et deuxième longueurs d'onde étant différentes l'une de l'autre et étant choisies de manière à amener le matériau convertisseur élévateur à libérer un rayonnement électromagnétique par irradiation combinée avec au moins ladite première et ladite deuxième longueur d'onde, et ledit rayonnement électromagnétique libéré contient un rayonnement d'au moins une troisième longueur d'onde supplémentaire qui est spécifique au retour d'au moins un électron d'un niveau d'énergie dudit ion activateur, au moins ledit électron étant excité par le rayonnement combiné d'au moins ladite première et d'au moins ladite deuxième longueur d'onde.

2. Système de sécurité de produit selon la revendication 1,
**caractérisé en ce que** ladite première et ladite deuxième source de rayonnement électromagnétique comprennent un laser.

3. Système de sécurité de produit selon la revendication 2,
**caractérisé en ce que** ledit laser peut être actionné en mode pulsé.

4. Système de sécurité de produit selon l'une quelconque des revendications 1 à 3, **caractérisé en ce que** ledit équipement d'authentification comprend au moins un dispositif de détection optoélectronique.

5. Système de sécurité de produit selon l'une quelconque des revendications 1 à 4, **caractérisé en ce que** l'équipement d'authentification comprend en outre des éléments optiques pour diriger et/ou focaliser le faisceau laser sur le matériau convertisseur élévateur.

6. Système de sécurité de produit selon l'une quelconque des revendications 1 à 5, **caractérisé en ce que** la troisième longueur d'onde supplémentaire se situe dans une plage de 150 à 3000 nm.

7. Système de sécurité de produit selon la revendication 6,
**caractérisé en ce que** la troisième longueur d'onde supplémentaire se situe dans une plage de 400 à 700 nm.

8. Système de sécurité de produit selon la revendication 6,
**caractérisé en ce que** ladite troisième longueur d'onde supplémentaire se situe dans une plage de 180 à 400 nm.

9. Système de sécurité de produit selon la revendication 6,
**caractérisé en ce que** ladite troisième longueur d'onde supplémentaire se situe dans une plage de 700 à 2700 nm, de préférence dans une plage de 1100 à 2500 nm.

10. Système de sécurité de produit selon les revendications 1 à 9, **caractérisé en ce que** le matériau convertisseur élévateur est lisible en machine.

11. Système de sécurité de produit selon l'une quelconque des revendications 1 à 10, **caractérisé en ce que** le matériau convertisseur élévateur comprend au moins un composant cristallin choisi dans le groupe constitué des halogénures de lanthanides alcalin ou alcalinoterreux purs ou mixtes, des oxyhalogénures purs ou mixtes d'yttrium, de lanthane et de gadolinium et des oxysulfures d'yttrium, de lanthane et de gadolinium comme matrice hôte, ayant des ions de terres rares éventuellement incorporés comme activateurs et également éventuellement comme sensibilisateurs.

12. Système de sécurité de produit selon les revendications 1 à 11, **caractérisé en ce que** ledit matériau convertisseur élévateur comprend des particules de vitrocéramique.

13. Système de sécurité de produit selon l'une quelconque des revendications 1 à 12, **caractérisé en ce que** le matériau convertisseur élévateur est un pigment ayant une taille particulaire dans la plage de 0,1 à 50 µm, de préférence dans la plage de 1 à 20 µm, mieux encore de 3 à 10 µm.

14. Système de sécurité de produit selon la
revendication 12, **caractérisé en ce que** ledit composant cristallin dudit matériau composite vitrocéramique a une énergie de phonons qui ne dépasse pas 580 cm⁻¹, de préférence qui ne dépasse pas 400 cm⁻¹, mieux encore qui ne dépasse pas 350 nm.

15. Système de sécurité de produit selon l'une quelconque des revendications 12 ou 14, **caractérisé en ce que** le matériau composite vitrocéramique est sensiblement transparent au rayonnement électromagnétique dans la plage de 400 à 750 nm.

16. Système de sécurité de produit selon l'une quelconque des revendications 12 à 15, **caractérisé en ce que** le composant cristallin dudit matériau vitrocéramique a des dimensions moyennes égales ou inférieures à 50 nm, de préférence égales ou inférieures à 40 nm.

17. Système de sécurité de produit selon l'une quelconque des revendications 12 à 16, **caractérisé en ce que** ledit composant cristallin dudit matériau composite vitrocéramique comprend au moins un ion actif pour conférer des propriétés de conversion de la lumière des grandes ondes aux ondes courtes.

18. Système de sécurité de produit selon la revendication 17, **caractérisé en ce que** ledit ion actif et éventuellement ledit sensibilisateur est un ion de terre rare, choisi de préférence dans le groupe constitué de Pr³⁺, Nd³⁺, Sm³⁺, Eu³⁺, Tb³⁺, Dy³⁺, Ho³⁺, Er³⁺, Tm³⁺ et Yb³⁺.

19. Système de sécurité de produit selon l'une quelconque des revendications 12 à 18, **caractérisé en ce que** la vitrocéramique est une vitrocéramique d'oxyfluorure.

20. Système de sécurité de produit selon la
revendication 19, **caractérisé en ce que** le composant cristallin du matériau composite vitrocéramique comprend du LaF₃.

21. Système de sécurité de produit selon l'une quelconque des revendications 19 ou 20, **caractérisé en ce que** la matrice de verre dudit matériau composite vitrocéramique consiste essentiellement en Na₂O:Al₂O₃ :SiO₂.

22. Procédé avancé pour l'authentification d'un article de sécurité, de préférence avec un système de sécurité de produit selon les revendications 1 à 21, ledit procédé comprenant les étapes suivantes :
a) la sélection d'au moins un matériau convertisseur élévateur ayant une structure électronique comprenant des niveaux d'énergie discrets,
b) la sélection de moyens pour émettre un rayonnement électromagnétique d'au moins une première longueur d'onde présélectionnée et d'au moins un deuxième longueur d'onde présélectionnée et, éventuellement, d'autres longueurs d'onde, où au moins ladite première et ladite deuxième longueur d'onde sont différentes l'une de l'autre,
c) l'exposition dudit matériau convertisseur élévateur sélectionné à l'étape a) à un rayonnement d'au moins ladite première et ladite deuxième longueur d'onde présélectionnées définies à l'étape b), tandis que la première longueur d'onde favorise le transfert d'au moins un électron d'un premier niveau d'énergie à au moins un deuxième niveau d'énergie dont l'énergie est supérieure à celle dudit premier niveau, et ladite deuxième longueur d'onde favorise le transfert dudit électron du deuxième niveau d'énergie à au moins un troisième niveau d'énergie, ledit troisième niveau d'énergie étant supérieur audit deuxième niveau d'énergie,
d) éventuellement, l'exposition dudit matériau convertisseur élévateur au rayonnement supplémentaire d'au moins une autre longueur d'onde qui favorise le transfert de l'électron vers des niveaux d'énergie supérieurs à ceux dudit troisième niveau,
e) l'enregistrement du spectre d'émission provenant de la disparition des niveaux d'énergie supérieurs du matériau convertisseur élévateur,
f) l'analyse dudit spectre d'émission provenant de ladite disparition pour déterminer la présence d'au moins une longueur d'onde qui est spécifique à la disparition d'au moins un électron d'au moins ledit troisième niveau d'énergie ou niveau d'énergie supérieur.

23. Marquage de sécurité distribuant une émission électromagnétique d'une certaine longueur d'onde comme dispositif d'authentification, ladite émission électromagnétique étant produite comme émission d'un matériau anti-Stokes à la suite de l'excitation dudit matériau anti-Stokes par irradiation électromagnétique d'au moins deux longueurs d'onde différentes.

24. Article ayant un marquage de sécurité délivrant une émission électromagnétique d'une certaine longueur d'onde comme moyens d'authentification, ladite émission électromagnétique étant produite comme émission d'un matériau anti-Stokes faisant suite à l'excitation dudit matériau anti-Stokes par irradiation électromagnétique d'au moins deux longueurs d'onde différentes.
